Europäisches Patentamt

European Patent Office

Office européen des brevets

(11) Numéro de publication: **0 273 827**
**A2**

## (12) DEMANDE DE BREVET EUROPEEN

(21) Numéro de dépôt: 87402953.1

(22) Date de dépôt: 22.12.87

(51) Int. Cl.⁴: **H 04 L 27/02**
G 11 B 5/008

(30) Priorité: 30.12.86 FR 8618351

(43) Date de publication de la demande:
06.07.88 Bulletin 88/27

(84) Etats contractants désignés:
DE FR GB IT NL SE

(71) Demandeur: THOMSON-CSF
173, Boulevard Haussmann
F-75379 Paris Cédex 08 (FR)

(72) Inventeur: Fouche, Yvon
THOMSON-CSF SCPI 19, avenue de Messine
F-75008 Paris (FR)

Baril, Michel-Claude
THOMSON-CSF SCPI 19, avenue de Messine
F-75008 Paris (FR)

Drabowitch, Serge
THOMSON-CSF SCPI 19, avenue de Messine
F-75008 Paris (FR)

Elleaume, Philippe
THOMSON-CSF SCPI 19, avenue de Messine
F-75008 Paris (FR)

(74) Mandataire: Benoit, Monique et al
THOMSON-CSF SCPI 19, avenue de Messine
F-75008 Paris (FR)

(54) Dispositif et procédé de modulation amplitude-phase utilisant une pluralité d'émetteurs.

(57) L'invention a principalement pour objet un dispositif et un procédé de modulation amplitude-phase utilisant une pluralité d'émetteurs.

L'invention concerne la modulation d'amplitude phase utilisant au moins deux signaux modulés en phase additionnés vectoriellement. Le signal résultant est modulé en amplitude et/ou en phase.

L'invention s'applique notamment aux émetteurs de télévision, de radio, aux radars, ainsi qu'aux dispositifs de télécommunications.

FIG_3

EP 0 273 827 A2

**0 273 827**

**Description**

## DISPOSITIF ET PROCEDE DE MODULATION AMPLITUDE-PHASE UTILISANT UNE PLURALITE D'EMETTEURS

L'invention a principalement pour objet un dispositif et un procédé de modulation amplitude-phase utilisant une pluralité d'émetteurs.

On utilise la modulation d'ondes électromagnétiques pour l'acquisition et/ou la transmission d'information.

Le dispositif de transmission de type connu utilise la modulation de l'amplitude (AM en terminologie anglo-saxonne), ou la modulation de fréquence (FM en terminologie anglo-saxonne).

D'autre part, il est connu d'utiliser, notamment en radar, une pluralité d'émetteurs connectés à une antenne unique, pour émettre du rayonnement électromagnétique. Ainsi, il est possible d'effectuer la somme de puissance susceptible d'être fournie par chaque émetteur. Les émetteurs utilisés suivent la même modulation en amplitude et en phase. L'addition de puissance d'une pluralité d'émetteurs est utilisée pour des émetteurs transistorisés (solid state en terminologie anglo-saxonne).

Le dispositif objet de la présente invention comporte une pluralité d'émetteurs, les signaux émis étant la somme vectorielle des signaux de chaque émetteur. Ainsi il est possible à partir d'une pluralité d'émetteurs d'obtenir un signal modulé en phase et/ou en amplitude. Il est par exemple possible d'utiliser deux émetteurs travaillant en classe C, c'est-à-dire saturés, modulés en phase pour obtenir une modulation amplitude-phase. L'utilisation d'émetteurs en classe C permet d'obtenir d'excellents rendements énergétiques ainsi qu'une très bonne linéarité de phase.

L'utilisation de deux modulations indépendantes, l'amplitude et la phase, permet soit d'augmenter le débit de transmission, soit de diminuer la résolution nécessaire au fonctionnement du dispositif selon la présente invention.

Les débits importants d'information sont rendus possibles par un accrochage, à la réception, d'amplitude et de phase.

L'invention a principalement pour objet un dispositif d'émission d'ondes modulées comportant une pluralité d'émetteurs, caractérisé par le fait qu'il comporte un dispositif de traitement d'information susceptible de fournir à chaque émetteur, ou dispositif de modulation de phase associé à un émetteur, les valeurs de phase nécessaires pour obtenir un signal modulé en amplitude et/ou en phase par recombinaison dans un dispositif de sommation des signaux issus des émetteurs.

L'invention a encore pour objet un dispositif d'enregistrement magnétique d'information comportant une pluralité de têtes magnétiques, caractérisé par le fait qu'il comporte un dispositif de traitement d'information susceptible de fournir à chaque tête magnétique les valeurs de phase à enregistrer qui recombinées à la lecture reconstitueront le signal enregistré.

L'invention sera mieux comprise au moyen de la description ci-après des figures annexées données comme des exemples non limitatifs parmi lesquels :
- La figure 1 est un schéma d'un dispositif radar de type connu ;
- la figure 2 est un schéma illustrant le principe du dispositif selon la présente invention ;
- la figure 3 est un schéma d'un premier exemple de réalisation du dispositif selon la présente invention ;
- la figure 4 est un schéma d'un deuxième exemple de réalisation du dispositif selon la présente invention ;
- la figure 5 est un schéma d'un troisième exemple de réalisation du dispositif selon la présente invention ;
- la figure 6 est un schéma d'un exemple de réalisation d'un détail du dispositif des figures 3, 4 et 5 ;
- la figure 7 est un schéma de fonctionnement d'une variante de réalisation du dispositif selon la présente invention ;
- la figure 8 est un schéma illustrant la répartition des divers états susceptibles d'être obtenus avec le dispositif de la figure 7 ;
- la figure 9 est un schéma illustrant un premier exemple de transmission numérique ;
- la figure 10 est un schéma illustrant un deuxième exemple de transmission numérique ;
- la figure 11 est un schéma illustrant un troisième exemple de transmission numérique ;
- la figure 12 est un schéma d'un quatrième exemple de réalisation du dispositif selon la présente invention ;
- la figure 13 est un schéma d'un cinquième exemple de réalisation du dispositif selon la présente invention ;
- la figure 14 est un schéma illustrant le principe de fonctionnement du dispositif des figures 12 et 13 ;
- la figure 15 est un schéma d'un exemple de réalisation d'un dispositif selon la présente invention ;
- la figure 16 est un schéma d'un radar selon la présente invention ;
- la figure 17 est un schéma illustrant une application du dispositif selon la présente invention ;
- la figure 18 est un schéma d'un exemple de réalisation du dispositif selon la présente invention ;
- la figure 19 est un schéma illustrant le fonctionnement du dispositif de la figure 18 ;
- la figure 20 est un schéma d'un premier exemple de réalisation des connexions d'émetteurs mises en oeuvre dans le dispositif selon la présente invention ;

- la figure 21 est un schéma d'un second exemple de réalisation des connexions d'émetteurs selon la présente invention ;

- la figure 22 est un schéma d'un troisième exemple de réalisation d'un dispositif selon la présente invention ;

- la figure 23 est un schéma d'une variante de réalisation d'un dispositif de la figure 18 ;

- la figure 24 est un schéma illustrant un principe mis en oeuvre dans le dispositif de la figure 6 ;

- la figure 25 est un schéma d'un exemple de réalisation du dispositif selon la présente invention ;

- la figure 26 est un schéma d'un exemple de réalisation du dispositif selon la présente invention ;

- la figure 27 est un schéma illustrant un principe mis en oeuvre dans le dispositif des figures 25 et 26.

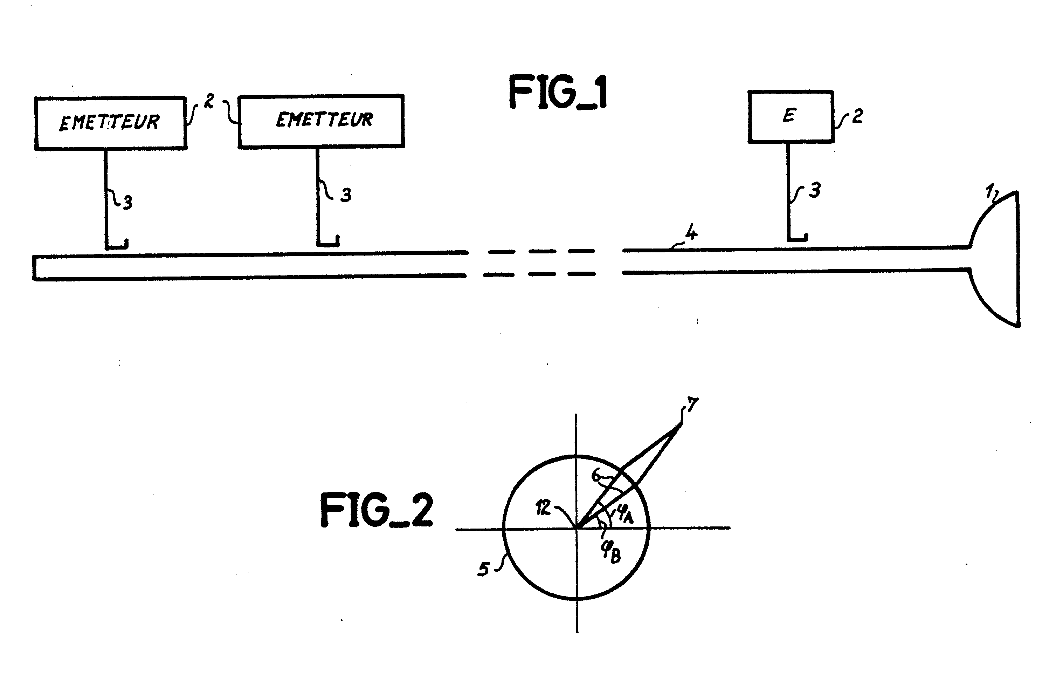

Sur les figures 1 à 27 on a utilisé les mêmes références pour désigner les mêmes éléments.

Sur la figure 1, on peut voir un radar de type connu utilisant une pluralité d'émetteurs 2 transistorisés. Les émetteurs 2 sont reliés à une antenne unique 1, par exemple par l'intermédiaire de coupleurs 3 et d'un guide d'onde 4.

Tous les émetteurs 2 subissent exactement la même modulation. On utilise une pluralité d'émetteurs pour pouvoir compenser le fait que les émetteurs à état solide présentent une faible puissance crête. Le signal obtenu est la somme arithmétique des signaux générés par chacun des émetteurs 2 ; les émetteurs 2 sont disposés de manière que leur énergie s'additionne en phase.

Sur la figure 2, on peut voir le principe du dispositif selon la présente invention. La figure 2 illustre l'exemple de l'utilisation de deux émetteurs de même puissance. Sur la figure 2, on a représenté en coordonnée polaire les signaux 6 susceptibles d'être émis par deux émetteurs 2 de la figure 1. Le module représente l'amplitude du signal émis, l'angle la phase. Le cercle 5 représente l'amplitude des émetteurs 2 utilisés. Un premier signal 6 correspond à une phase $\varphi A$, le second signal 6 correspond à une phase $\varphi B$. Le signal résultant 7 est obtenu par addition vectorielle des signaux 6 issus des deux émetteurs.

Ainsi, on peut voir, que la modulation appropriée des phases $\varphi A$ et $\varphi B$ des deux émetteurs 2 permet d'obtenir un signal 7 modulé en amplitude et en phase.

Avantageusement, on utilise le procédé et le dispositif selon la présente invention pour obtenir des transmissions numériques des données.

Il est bien entendu que l'utilisation d'une pluralité d'émetteurs d'amplitude différente ne sort pas du cadre de la présente invention.

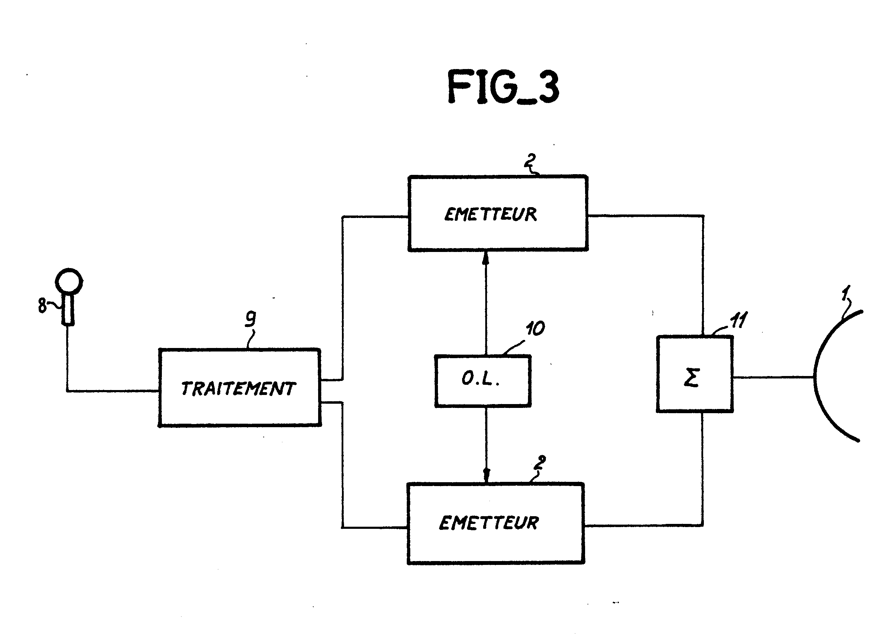

Sur la figure 3, on peut voir un exemple de réalisation d'un dispositif d'émission selon la présente invention.

Le dispositif comporte au moins une source 8 des signaux à transmettre, par exemple un microphone. La source des signaux 8 est connectée à un dispositif de traitement 9. Le dispositif de traitement 9 convertit le signal reçu en signaux de commande d'émetteurs 2, (ou de dispositifs de modulation de phase non représentée sur la figure 3), permettant d'obtenir les phases nécessaires permettant la génération d'un signal qui est fonction du signal à transmettre. Le dispositif de traitement est connecté à au moins deux émetteurs 2.

Avantageusement, un oscillateur local 10 est connecté aux émetteurs 2 permettant une augmentation de fréquence. Il est possible d'utiliser plusieurs étages (non représentés) pour augmenter la fréquence. Les signaux issus des émetteurs 2 sont sommés par un dispositif de sommation 11. Le dispositif de sommation 11 est par exemple un anneau hybride ou un Té magique. Par exemple deux branches du Té magique sont reliées aux émetteurs 2 une branche est reliée à une antenne 1 la quatrième branche étant reliée par exemple à une charge adaptée.

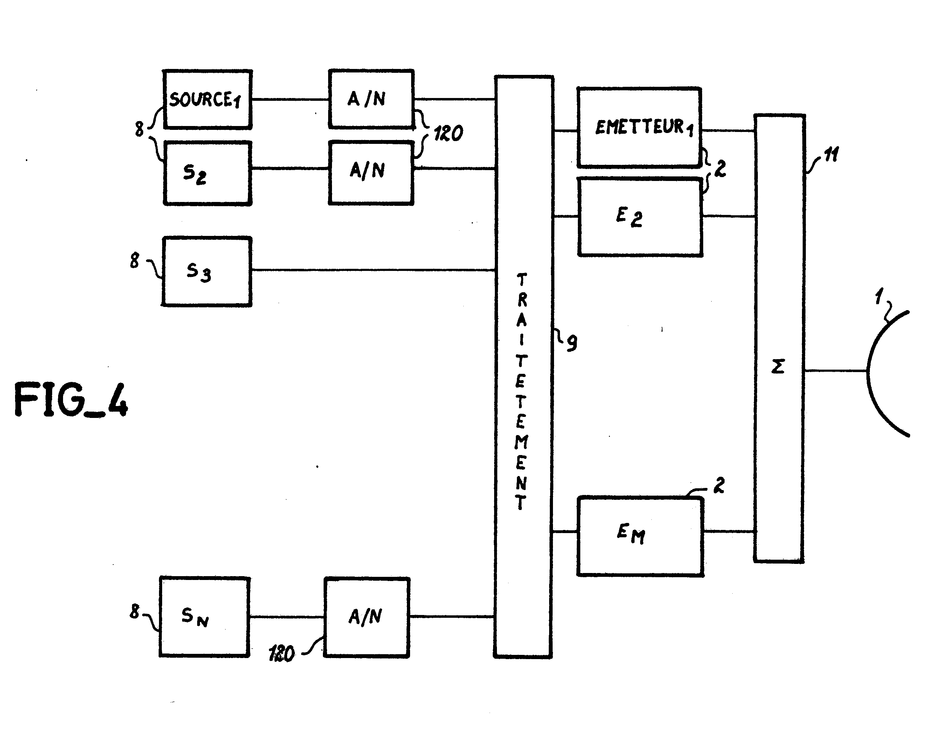

Sur la figure 4, on peut voir un exemple de réalisation d'un dispositif de transmission selon l'invention comportant N sources de signal 8. Dans l'exemple illustré sur la figure 4, un dispositif effectif effectue des transmissions numériques. Ainsi dans le cas ou on utilise des sources de signal analogique il faut numériser ce signal. La numérisation du signal est obtenue soit par le dispositif de traitement 9, soit comme illustré sur la figure par des convertisseurs analogiques-numériques 120 placés en amont du dispositif de traitement 9. Il est bien entendu que seules les sources 8 de signal analogique sont connectées à des convertisseurs analogiques-numériques 120. Le dispositif de traitement 9 est connecté à M émetteurs 2. Les M émetteurs 2 sont connectés à un dispositif de sommation 11. Le dispositif de sommation 11 est relié à une antenne 1. Le dispositif de traitement 9 délivre aux émetteurs 2 les références de phase nécessaires à l'obtention de la modulation amplitude-phase désirée. Le dispositif illustré sur la figure 4 permet d'effectuer des transmissions simultanées de plusieurs voies par un canal de transmission unique ou au contraire, selon les conditions de transmissions et les débits désirés, la transmission d'une voie unique sur une pluralité de canaux de transmission. Par exemple, on transmet sur une première fréquence de la porteuse les informations nécessaires à l'obtention d'un programme de télévision et sur une seconde fréquence de la porteuse des informations complémentaires nécessaires à l'obtention d'images en haute définition.

Avantageusement, le dispositif de traitement 9 permet de modifier le signal à émettre par exemple le dispositif de traitement 9 modifie l'équilibre chromatique d'un signal vidéo couleur ou effectue un filtrage des aigus d'un signal sonore.

L'utilisation de transmission numérique permet de rendre indépendantes les informations à transmettre du canal de transmission. Ainsi il est possible d'utiliser le dispositif selon la présente invention notamment pour effectuer des émissions de radio, de télévision, de transmission sur par exemple faisceau hertzien ou d'émissions d'impulsion radar modulée.

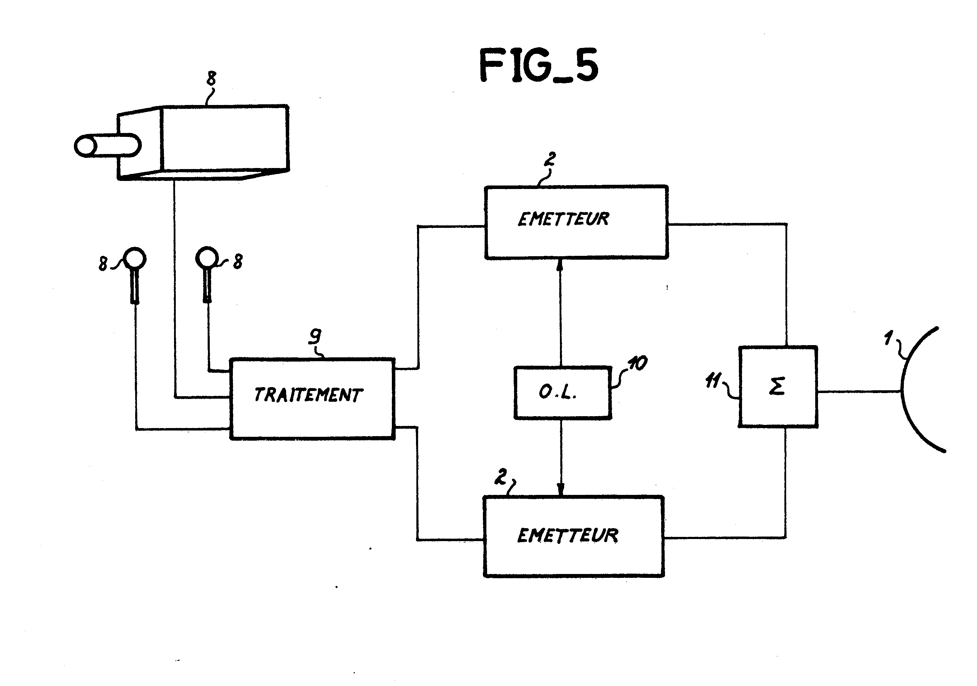

Sur la figure 5, on peut voir un émetteur d'émissions de télévision selon la présente invention. Dans l'exemple illustré sur la figure 5 on utilise comme source de signal 8 une caméra vidéo, et deux microphones. Il est possible d'utiliser une régie, qui délivre en sortie, par exemple deux voies son et une voie vidéo l'entrée de la régie étant constitué par exemple par des caméras, des microphones, des générateurs de caractères alphanumériques et des magnétoscopes. Les sources de signal 8 sont connectées à un dispositif de traitement 9. Le dispositif de traitement 9 est connecté à deux émetteurs 2. D'autre part, un oscillateur local 10 est connecté aux émetteurs 2. Les sorties des émetteurs 2 sont connectées aux entrées d'un dispositif de sommation de signal 11. La sortie du dispositif de sommation de signal 11 est connectée à une antenne d'émission 1.

L'utilisation d'un canal de transmission à haut débit permet de réaliser des émissions de télévision en haute définition. L'augmentation du débit de transmission du canal est obtenue, par exemple, par l'émission par l'antenne 1 de deux modulations indépendantes, la modulation d'amplitude et la modulation de phase.

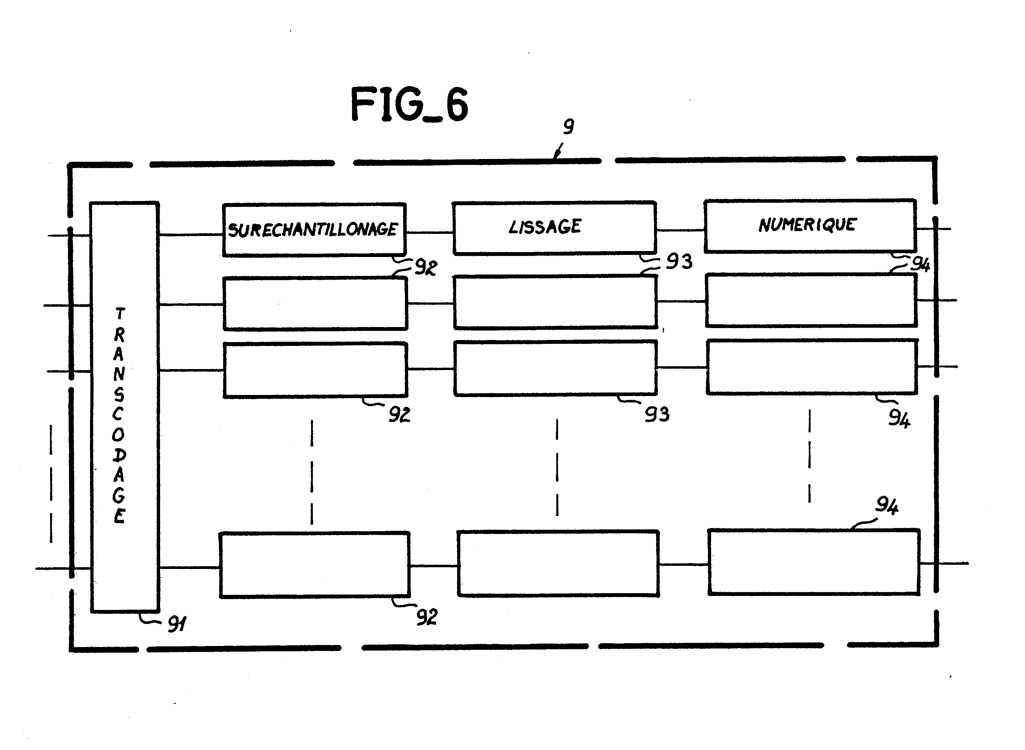

Sur la figure 6, on peut voir un dispositif de traitement 9 permettant de répartir N sources de signal 8 (non illustrées sur la figure 6) sur M émetteurs 2 (non illustrés sur la figure 6).

Le dispositif 9 comporte un dispositif de transcodage 91. Le dispositif de transcodage 91 permet de fournir aux émetteurs 2 les signaux nécessaires à l'émission. Par exemple; dans le cas d'une source de signal 8 unique et de deux émetteurs 2 on transmet un signal utile complexe $x(t) = \rho(t) \cdot e^{j\varphi(t)}$ modulé en BLU autour d'une fréquence $f_0$.

Les signaux émis $e(t)$ sont donnés par la formule :

$$e(t) = \text{Réel } [x(t) \cdot e^{j2\pi f_0 t}]$$
$$e(t) = \rho(t) \text{ Réel } [e^{j(2\pi f_0 t + \varphi(t))}]$$
$$e(t) = \rho(t) \cos (2\pi f_0 + \varphi(t))$$

Posons $\Delta\varphi(t) = \text{Arc} \cos \rho(t)/2$.

Ainsi on obtient les signaux de modulation d'un premier émetteur 2 :

$$x_1(t) = e^{j\varphi(t) + \Delta\varphi(t)}$$

et le signal de modulation du second émetteur 2 :

$$x_2(t) = e^{j\varphi(t) - \Delta\varphi(t)}$$

A la sortie du dispositif de sommation 11 des figures 3, 4 et 5 on obtient un signal

$$e'(t) = \text{Réel } [x_1(t) \cdot e^{j2\pi f_0 t}] +$$

$$\text{Réel } [x_2(t) \cdot e^{j2\pi f_0 t}]$$

$$e'(t) = \text{Réel } [[(x_1(t) + x_2(t)] e^{j2\pi f_0 t}]$$

$$e'(t) = \text{Réel } [2 \; \frac{e^{j\Delta\varphi(t)} - e^{j\Delta\varphi(t)}}{2}$$

$$e^{j\varphi(t)} \; e^{j2\pi f_0 t}]$$

$$e'(t) = \text{Réel } [2 \cos \Delta\varphi(t) \; e^{j2\pi f_0 t + \varphi(t)}]$$

Ainsi le signal émis est égal au signal que l'on voulait émettre. Dans le cas où le nombre M d'émetteurs 2 est supérieur à 2 le dispositif de transcodage 9 génère M signaux $x_i(t)$, i variant de 1 à M, permettant d'obtenir le signal à émettre par addition desdits signaux. Pour un nombre M d'émetteurs supérieur à 2 il existe une infinité d'ensembles de phase élémentaire $(\varphi_1 \ldots \varphi_M)$.

Le choix d'un codage peut avantageusement minimiser la bande passante nécessaire des émetteurs 2.

Les signaux provenant de N sources de signal 8 sont multiplexés dans le temps et/ou transmis en parallèle.

Dans une variante de réalisation du dispositif selon la présente invention on utilise pour chaque émetteur une loi de modulation connue. Par exemple on utilise des lois de modulation binaire. Avantageusement on utilise pour tous les émetteurs 2 la modulation MSK (Minimum Shift Keying). Dans d'autres exemples de réalisation on utilise les lois de modulation CPFSK (Continus Phase Frequency Shift Keying) ou FSK (Frequency Shift Keying).

Avantageusement le dispositif de transcodage 91 est connecté en parallèle à M dispositifs de suréchantillonnage 92. Le dispositif de suréchantillonnage 92 effectue un suréchantillonnage du signal par exemple dans le rapport de 4 de 6 ou de 8.

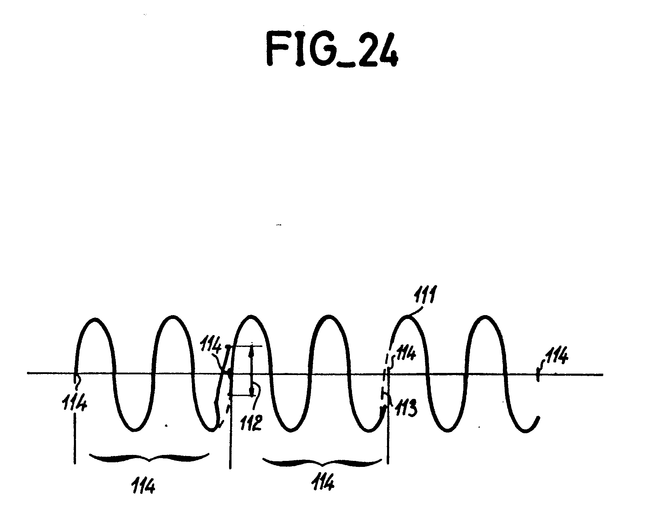

Avantageusement le dispositif de suréchantillonnage 92 est connecté à un dispositif de lissage du signal 93. Le dispositif de lissage du signal entre deux données transmises permet de réduire les sauts du signal, et ainsi de réduire la bande passante nécessaire aux transmissions. Les lissages du signal dans le dispositif 93 présentent l'inconvénient de réduire d'un facteur 2 les intervalles de temps dans lesquels l'information transmise est stable, ceci se traduit par une perte d'environ trois décibels au niveau de la réception. Les résultats de lissage sont illustrés sur la figure 24.

Avantageusement, le dispositif de lissage est connecté à un dispositif 94 de mise sur porteuse en numérique du signal. Les sorties du dispositif de mise en numérique sur porteuse du signal 94 sont connectées aux émetteurs 2 (non représentés sur la figure 6).

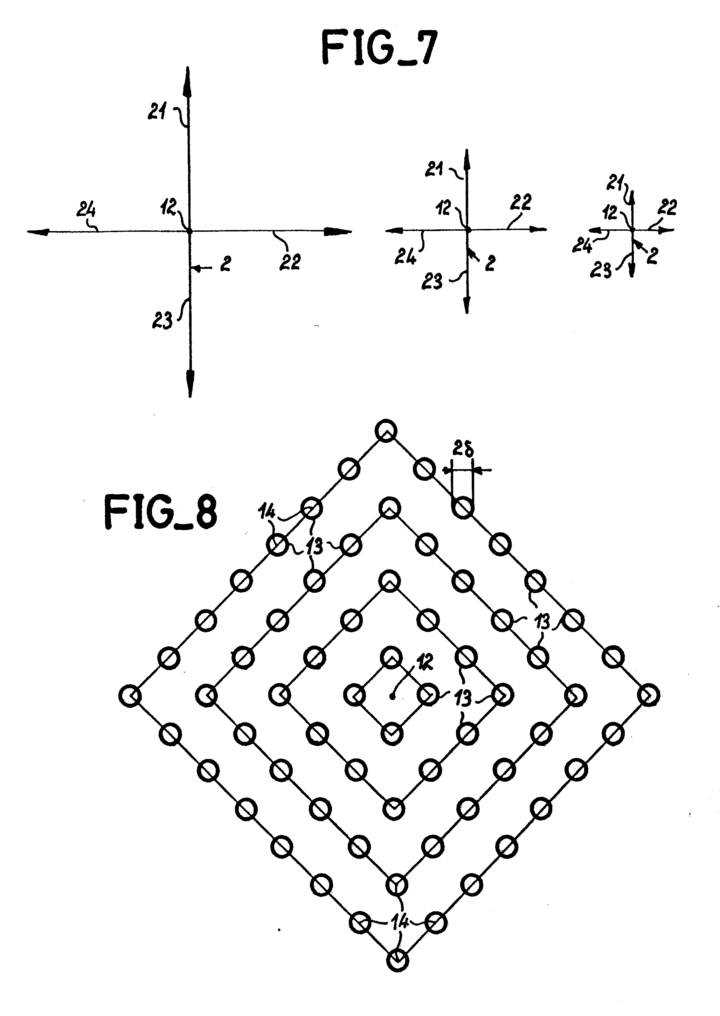

Sur la figure 7, on peut voir un premier exemple de réalisation de transmission selon l'invention utilisant des émetteurs 2 de puissance différente. Dans l'exemple illustré sur la figure 7 on utilise trois émetteurs 2, un premier émetteur 2 de puissance unitaire, un second émetteur 2 de puissance double et un troisième émetteur 2 de puissance quadruple. Chaque émetteur est susceptible d'émettre une pluralité d'états de phase différents par exemple quatre états de phase référencés 21, 22, 23 et 24 sur la figure. Le centre 12 correspond à une puissance d'émission nulle. Une donnée numérique est transmise en combinant les quatre états possibles des trois émetteurs.

Sur la figure 8, on peut voir un exemple de répartition des signaux numériques qu'il est possible d'obtenir avec le dispositif de la figure 7. Les valeurs numériques sont représentés par des disques 13 de diamètre 2δ correspondant à une incertitude autour des points 14 correspondants du signal théorique émis par combinaison des signaux émis par les émetteurs 2 de la figure 7. En effet, il est primordial de pouvoir, à la réception déterminer la valeur numérique, c'est-à-dire le point 14 du plan complexe (amplitude, phase) qui a été émise et ce malgré la déformation de l'information. la déformation de l'information provient notamment des distorsions et du bruit thermique. La taille des disques 14 dépend de la probabilité d'erreur que l'on est près à accepter.

Par exemple à un rayon δ des disques 14 égal à :

4,75 σ (σ étant l'écart type du bruit thermique) correspond une probabilité d'erreur de 10-6;

7 σ correspond une probabilité d'erreur de $10^{-12}$

et 10 σ correspond une probabilité d'erreur de $10^{-23}$.

Une probabilité d'erreur de $10^{-6}$ peut être considérée comme trop forte pour les transmissions d'émission car elle correspond à des erreurs toujours présentes sur l'écran. Ces défauts peuvent complètement déformer l'image en télévision en haute définition utilisant la compression d'informations pour la transmission.

Le choix de δ influe sur le nombre d'état différent (de points 13) que l'on peut transmettre.

L'invention n'est pas limitée à des disques 14. Il est possible d'utiliser d'autres surface 14 dans un plan complexe pour déterminer la valeur numérique d'un point, comme par exemple des polygones.

Dans une première variante de réalisation du dispositif selon l'invention les disques 14 ne sont pas jointifs. A l'espace entre les disques 14 n'est attribué aucune valeur numérique. A la réception un signal n'appartenant pas à un disque 14 n'est pas traité.

Dans une seconde variante de réalisation du dispositif selon l'invention on utilise des régions 14 jointives.

Avantageusement, les points 13 sont les barycentres des régions 14.

Les signaux correspondent à la somme vectorielle des quatre états de phase 21, 22, 23 et 24 des émetteurs 2 correspondants respectivement aux phases égales à ©/2 0 - ©/2 ©.

Il est impératif dans le choix des affectations des portions de l'espace amplitude-phase à des valeurs numériques à transmettre de ne pas affecter une même portion de l'espace à deux valeurs numériques différentes.

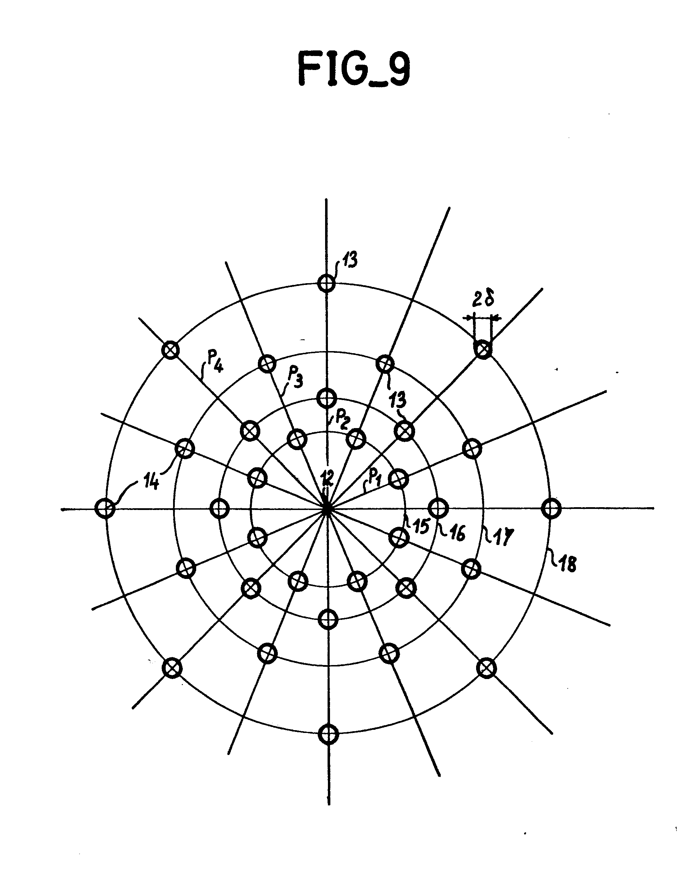

Sur la figure 9, on peut voir un exemple de répartition des valeurs numériques du signal dans le plan complexe obtenu avec deux émetteurs de même puissance. Le signal comporte 32 valeurs différentes ce qui correspond à une transmission numérique sur cinq bits. La valeur numérique correspondant à des disques 13 de diamètre égal à 2δ répartis sur quatre cercles 15, 16, 17 et 18 de diamètre respectif ρ1, ρ2, ρ3 et ρ4. ρ1 est par exemple égal à √2/2, ρ2 = 1, ρ3 = √2 et ρ4 = 2, la puissance d'un émetteur étant normalisée à 1. Les points 14 sont répartis régulièrement sur chaque cercle.

Avantageusement, pour diminuer le risque d'erreur à la réception, on éloigne au maximum les disques 13. Ainsi, sur chaque cercle suivant les points 14 sont placés sur les bissectrices des points 14 du cercle précédent. Dans l'exemple illustré sur la figure 9 la discrimination de phase est égale à ©/8, le rapport signal/bruit est compris entre 15 et 24 décibels.

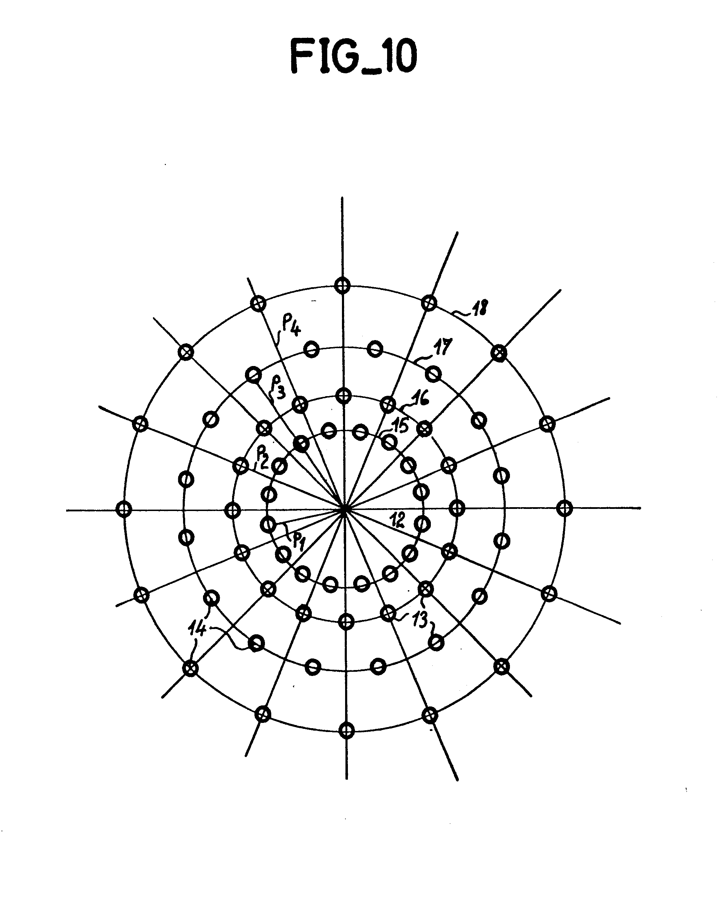

Sur la figure 10, on peut voir un exemple de répartition dans le plan complexe de valeurs numériques transmises sur six bits c'est-à-dire comportant 64 points 14 distincts. Les points 14 sont répartis sur quatre cercles référencés de 15 à 18 de diamètre respectif ρ1 = √2/2, ρ2 = 1, ρ3 = √2, ρ4 = 2, la puissance d'un émetteur 2 étant normalisée à 1. La précision de phase nécessaire est égale à ©/16.

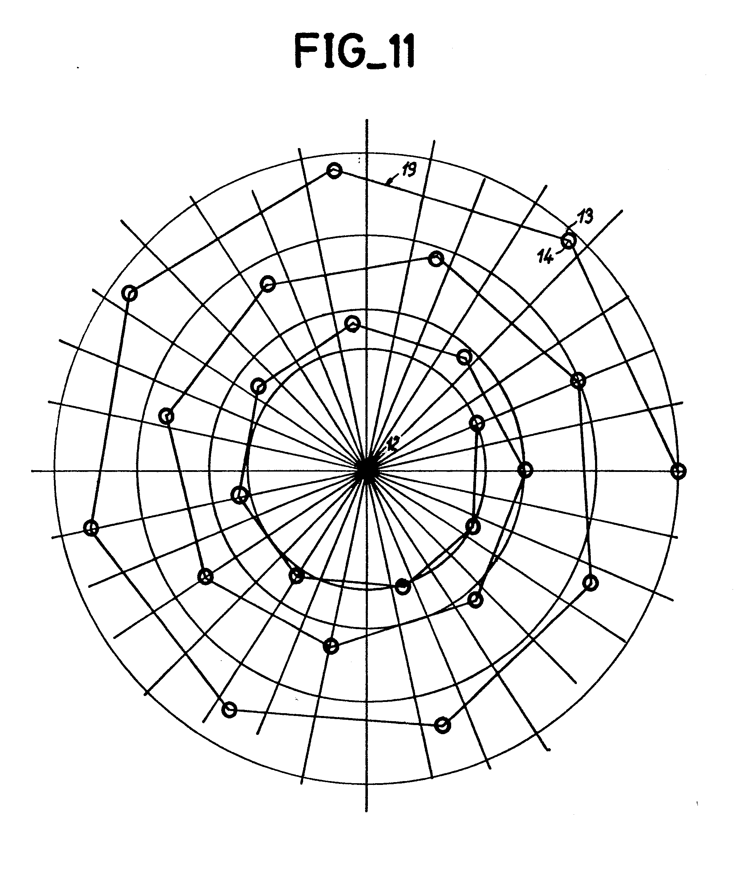

Sur la figure 11, on peut voir une répartition dans le plan complexe des diverses valeurs numériques à transmettre minimisant les risques de confusion. Les points 14 sont répartis sur une spirale de centre 12 comprise entre deux cercles correspondant à la puissance minimale nécessaire au rapport signal/bruit désiré et un cercle correspondant à la somme de puissance de tous les émetteurs utilisés. Avantageusement, la spirale est une spirale logarithmique. Sur la figure 11 on a représenté 24 points 14 distincts correspondant à un rapport signal/bruit de 30 décibels. La spirale utilisée était approximée par une courbe 19 réalisée en reliant les points 14.

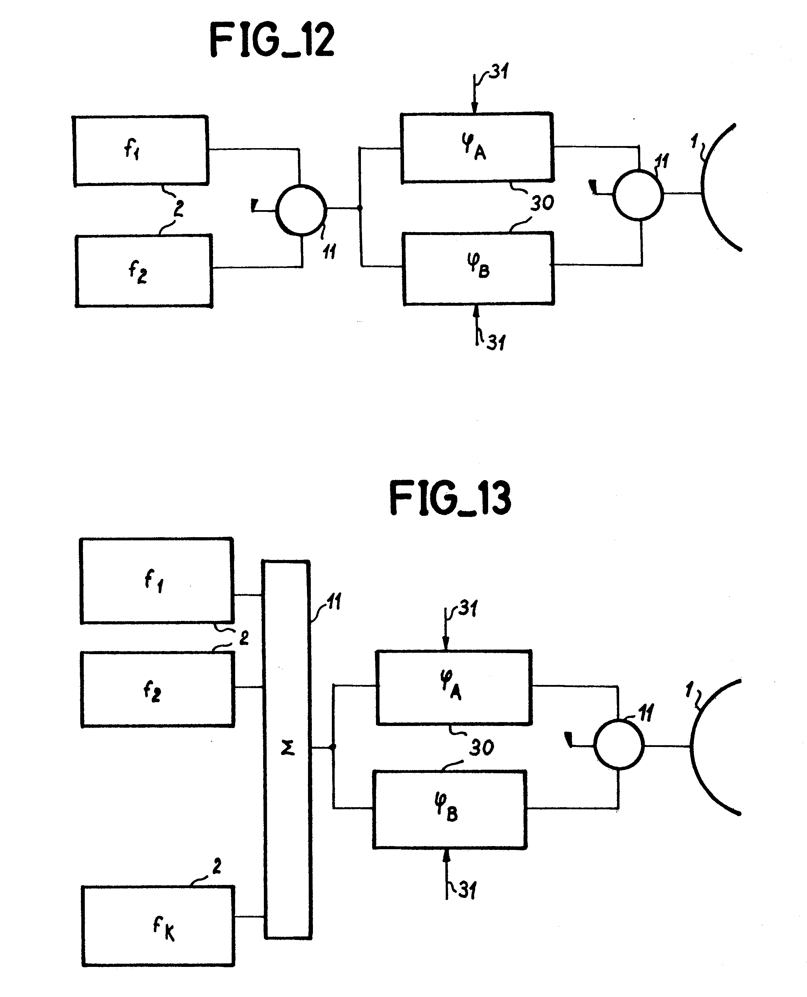

Sur la figure 12, on peut voir une variante de réalisation du dispositif selon la présente invention comportant deux émetteurs 2 susceptibles d'émettre sur deux fréquences différentes f1 et f2. L'utilisation de deux fréquences différentes f1 et f2 permet d'utiliser les propriétés de battement entre fréquences comme par exemple le fait que les transitions par zéro sont effectuées de façon stationnaire aux instants fixes dépendants du rapport de fréquence f1/f2.

Les émetteurs 2 sont reliés par un dispositif de sommation 11. Le dispositif de sommation 11 est un anneau hybride. La sortie du dispositif de sommation 11 est reliée aux entrées de deux modulateurs de phase 30. Les deux modulateurs de phase 30 sont susceptibles de moduler par exemple en bande latérale unique le signal reçu, la modulation de phase est obtenue à partir d'un signal 31 reçu par exemple à partir d'un dispositif de traitement 9 (non représenté sur la figure 12). Les signaux modulés en phase sont sommés par un dispositif de sommation 11. Le dispositif de sommation 11 est par exemple un anneau hybride. La sortie du dispositif de sommation 11 est reliée à une antenne d'émission 1.

Sur la figure 13, on peut voir un exemple de réalisation comportant k émetteurs 2 susceptibles de générer chacun un signal de fréquences différentes. Les sorties des émetteurs 2 sont connectées à un dispositif de sommation 11. Les fréquences correspondent au spectre de l'enveloppe du signal. La sortie du dispositif de sommation 11 est connectée aux entrées de deux modulateurs de phase 30. Les modulateurs de phase 30 reçoivent le signal de modulation 31. La sortie du dispositif de modulation 30 est reliée à un dispositif de sommation 11. Le dispositif de sommation est par exemple un anneau hybride. La sortie du dispositif de sommation 11 est reliée à une antenne d'émission 1.

L'utilisation d'une pluralité d'émetteurs de fréquence différente permet de générer des harmoniques d'ordre supérieur.

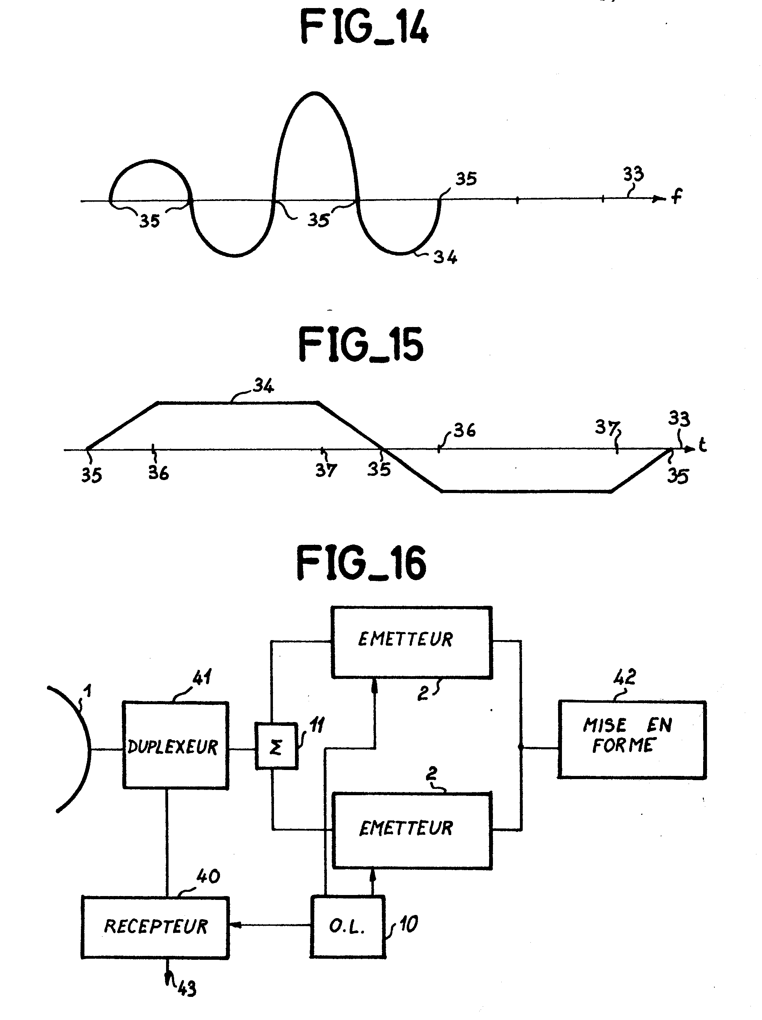

Sur la figure 14, on peut voir une courbe 34 du signal obtenu par battement en fonction du temps 33. La courbe 34 passe par 0 dans les instants 35 uniformément répartis dans le temps. Ainsi on facilite la détection de la valeur du signal capté. En effet il est possible de capter le signal lors de son amplitude maximale ou alors que la phase transmise est une phase correspondant à un signal unique et non à un mélange des signaux.

Sur la figure 15, on peut voir un signal obtenu avec un dispositif de la figure 13. Ce signal 34 a une forme trapézoïdale. Ainsi entre des instants 36 et 37 l'amplitude du signal est constante. Pour obtenir le signal on utilise notamment l'harmonique d'ordre 3.

Sur la figure 16, on peut voir un dispositif radar selon la présente invention. Le dispositif radar comporte un dispositif de mise en forme des impulsions 42. Le dispositif de mise en forme d'impulsions est connecté à au moins deux émetteurs 2. D'autre part, les émetteurs 2 reçoivent les signaux provenant d'un oscillateur local 10.

Dans une variante de réalisation du dispositif selon l'invention on utilise une pluralité d'oscillateurs locaux. Toutefois, il est impératif qu'aussi bien à l'émission qu'à la réception les signaux soient cohérents pour toute la chaîne de traitement d'information.

La sortie des émetteurs 2 est connectée aux entrées d'un dispositif de sommation du signal 11. La sortie du dispositif de sommation 11 est connectée à un duplexeur 41. La sortie du duplexeur 41 est connectée d'une part à une antenne d'émission réception 1, et, d'autre part, à un dispositif de réception 40. D'autre part, le dispositif de réception 40 est connecté à l'oscillateur local 10.

Le dispositif de mise en forme 42 permet aux émetteurs 2 d'effectuer la modulation d'impulsion désirée.

Le duplexeur 41 permet de diriger les échos reçus vers le récepteur 40 en l'isolant des émetteurs 2.

Les dispositifs de réception 40 génèrent un signal 43 susceptible de traitements ultérieurs. L'utilisation des deux émetteurs 2 modulés en phase par exemple en bande latérale unique permet de combiner une modulation de phase de type connu en radar, avec une modulation d'amplitude des impulsions permettant, par exemple, de limiter la bande passante occupée à l'émission, et une réduction des lobes secondaires temporels obtenus après le filtrage adapté grâce à la diminution de la pente des bords de l'impulsion.

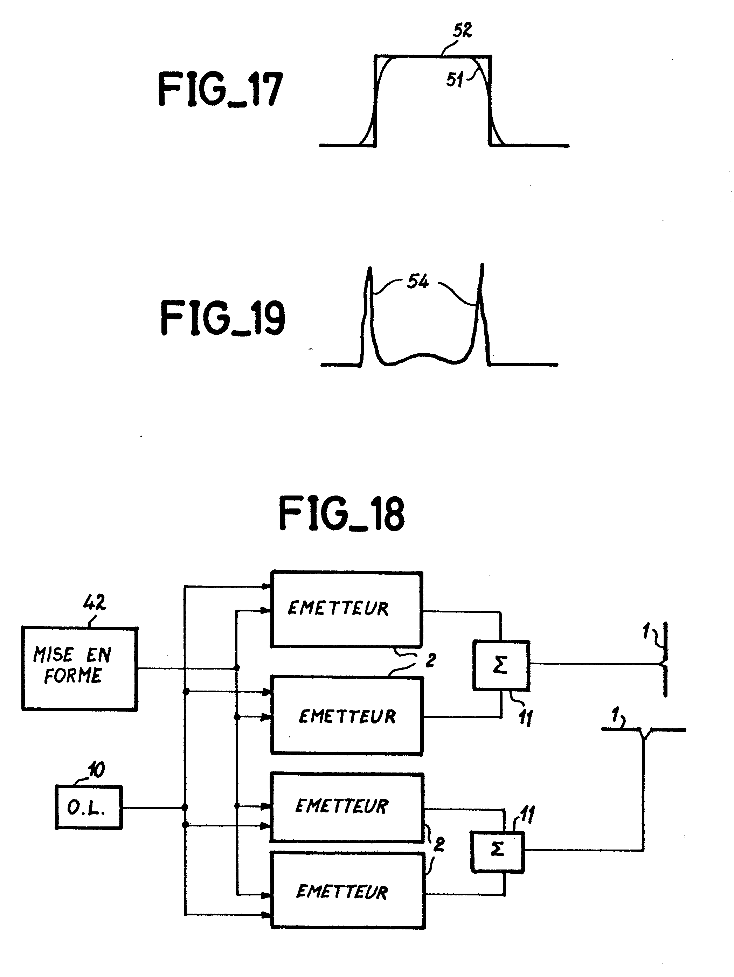

Sur la figure 17, on peut voir l'avantage procuré par le dispositif de la figure 16. L'impulsion 52 normalement émise en radar est une impulsion rectangulaire nécessitant une très large bande passante, ou provoquant l'apparition de lobe secondaire. La modulation d'amplitude réalisée par le dispositif selon la présente invention permet d'éviter des transitions brusques.

Sur la figure 18, on peut voir un dispositif d'émission radar comportant deux paires d'émetteurs 2 reliées à travers deux dispositifs de sommation 11 à deux éléments d'antenne 1 travaillant dans des polarisations orthogonales. Dans l'exemple de la figure 18 les éléments d'antenne 1 sont des dipôles. Ainsi, il est possible en effectuant une modulation d'amplitude des signaux présents sur chacune des antennes 1 d'obtenir une rotation de polarisation du signal émis. L'utilisation de la rotation de polarisation permet par exemple d'effectuer une analyse fine de signature des cibles.

Dans une variante de réalisation du dispositif selon la présente invention comportant deux émetteurs 2 seule l'énergie normalement dissipée par une charge au niveau du dispositif de sommation 11 est envoyée vers l'antenne présentant une polarisation orthogonale. Ceci permet d'une part de récupérer l'énergie qui normalement est perdue, et d'autre part d'avoir un écho de cible correspondant à une forme caractéristique du signal comportant deux pointes 54 illustrées sur la figure 19.

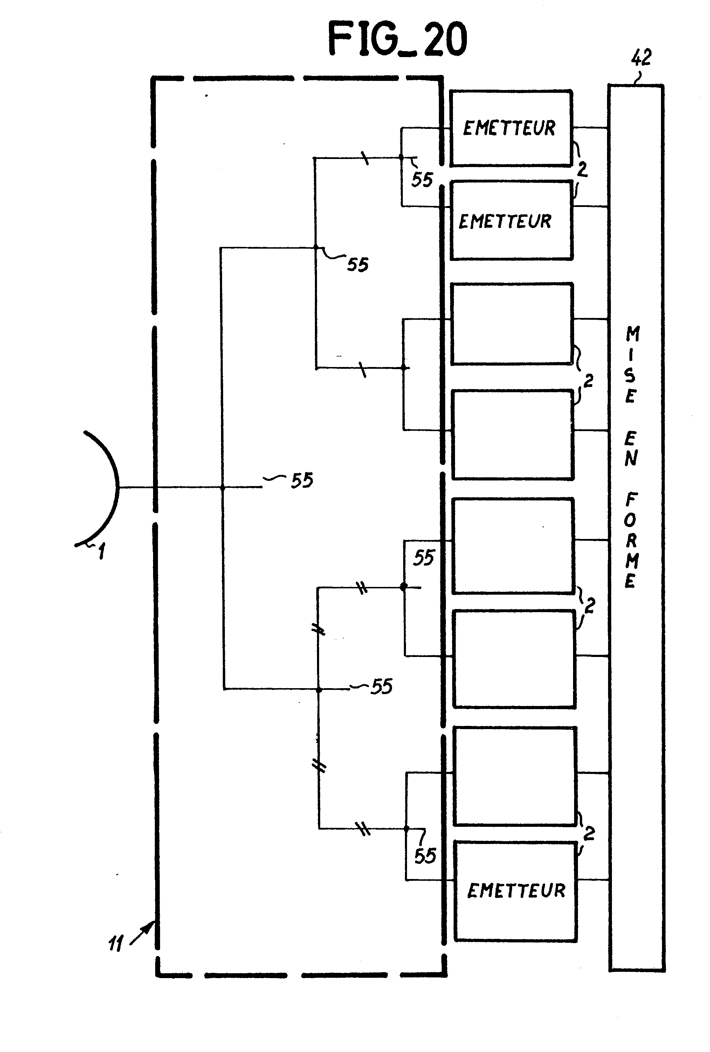

Sur la figure 20, on peut voir un exemple de réalisation du dispositif de sommation 11 des signaux d'une pluralité d'émetteurs. Dans le cas de la figure 20, le dispositif 11 est un arbre de distribution symétrique, c'est-à-dire que l'énergie issue de tous les émetteurs 2 parcourt la même distance pour arriver à l'antenne 1.

Avantageusement, à chaque division en deux de l'arbre symétrique est présente une charge 55 destinée à absorber l'énergie qui ne doit pas être émise correspondant à la composante en quadrature de phase d'une pluralité d'émetteurs.

Dans une variante de réalisation seule la dernière interconnexion comporte une charge 55.

Le dispositif de la figure 20 présente l'avantage de ne générer que de faibles pertes au niveau du dispositif de sommation des signaux 11.

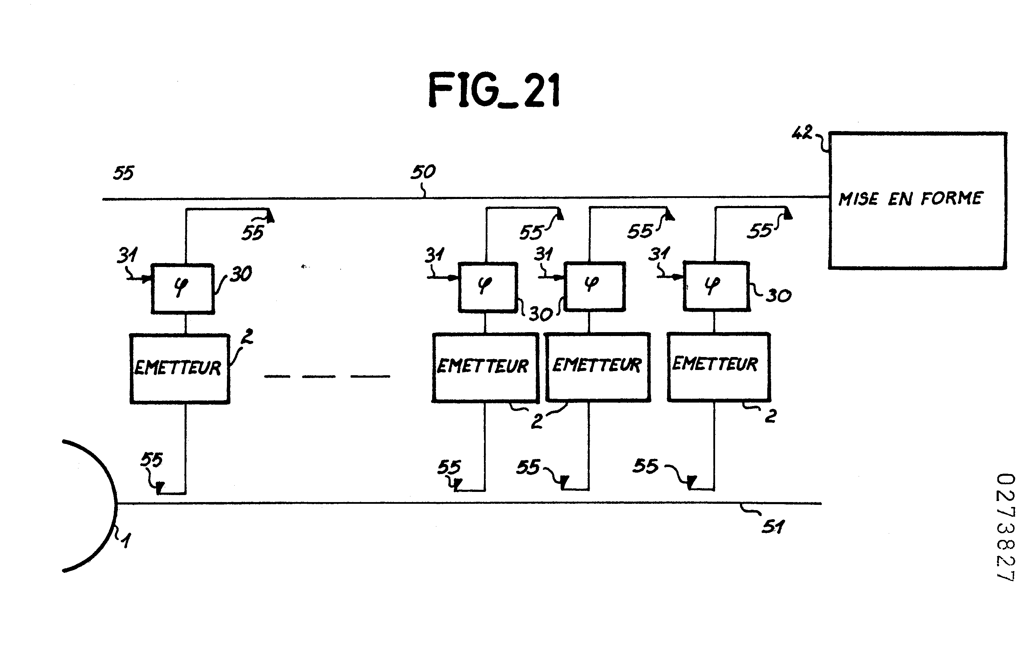

Sur la figure 21, on peut voir un second exemple de réalisation du couplage d'une pluralité d'émetteurs 2 avec une antenne 1. L'énergie de faible puissance issue du dispositif de mise en forme d'impulsion 42 se propage sur un guide d'onde ou une ligne de propagation 50 terminée par une charge adaptée 55. Sur la longueur de la ligne 50 sont disposés des coupleurs captant une partie de l'énergie. Les coupleurs sont connectés à des modulateurs de phase 30. Les modulateurs de phase 30 reçoivent d'autre part les signaux de modulation 31 par exemple d'un dispositif de traitement 9 non représenté sur la figure 21. Les sorties du dispositif de modulation de phase 30 sont connectées aux entrées des émetteurs 2. La sortie des émetteurs 2 est connectée à des coupleurs disposés le long d'une ligne de propagation 51 reliée à l'antenne 1. L'énergie modulée par le modulateur de phase 30 et amplifiée par les émetteurs 2 se propage sur la ligne 51 et est émise par l'antenne 1. Dans les conditions normales de fonctionnement le couplage permet de transmettre l'énergie de la ligne 50 vers le dispositif de modulation de phase 30 et des émetteurs 2 vers la ligne 51. Toutefois, il est avantageux, par sécurité et pour éviter d'éventuelles réflexions, de terminer le coupleur par des charges adaptées 55 destinées à absorber un éventuel surcroît d'énergie.

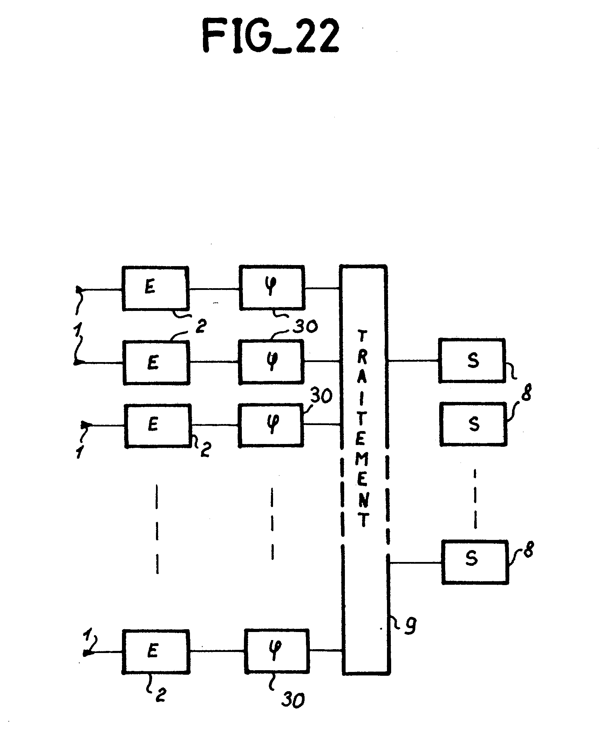

Sur la figure 22, on peut voir un émetteur selon la présente invention comportant une antenne réseau constituée d'une pluralité d'antennes élémentaires 1. Le dispositif de la figure 22 comporte une pluralité de sources 8 connectées à l'entrée d'un dispositif de traitement 9. Le dispositif de traitement 9 est connecté aux entrées des dispositifs de modulation de phase 30. Les sorties des dispositifs de modulation 30 sont connectées aux entrées des émetteurs 2. Les sorties des émetteurs 2 sont connectées à des antennes élémentaires 1. Les antennes élémentaires 1 sont par exemple des cornets.

Dans l'exemple illustré sur la figure 22 le dispositif rayonne deux composantes du signal, le signal en phase ainsi qu'un signal en quadrature de phase. Le signal en phase va former un faisceau directif d'énergie. Il est possible de diriger ce faisceau en ajoutant un incrément de phase aux phases nécessaires à la modulation du faisceau. De plus, le dispositif de la figure 22 émet un rayonnement omnidirectionnel en quadrature de phase avec le rayonnement directif.

L'invention n'est pas limitée à l'acquisition et aux transmissions des données. Le principe de la présente invention peut être appliqué au stockage des données, par exemple sous forme d'enregistrement sur bande magnétique.

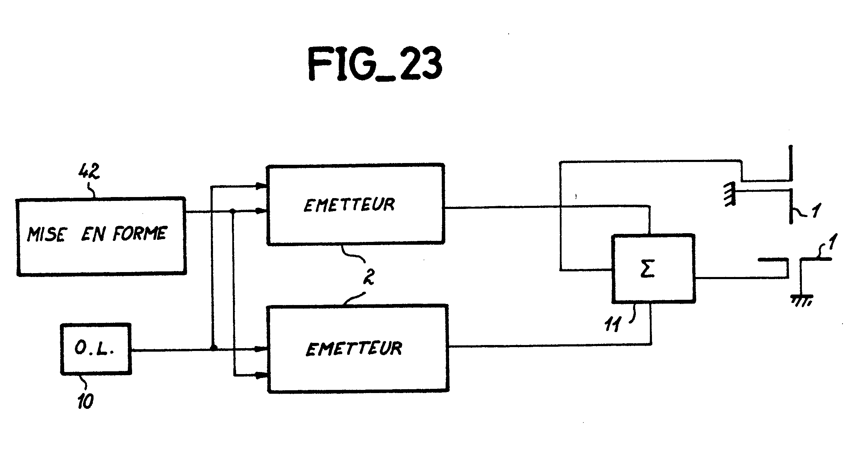

Sur la figure 23, on peut voir un enregistreur magnétique selon la présente invention. Le dispositif comporte au moins une source de signal 8. Dans l'exemple illustré sur la figure 23 les sources de signal sont des microphones. Il est bien entendu que l'utilisation d'autre source de signal comme par exemple des caméras vidéo, des instruments de mesure ou des calculateurs ne sort pas du cadre de la présente invention. Les sources de signal sont reliées au dispositif de traitement 9. Le dispositif de traitement 9 est analogue au dispositif de traitement des figures 3, 4, 5, 6 et 22. Le dispositif de traitement 9 est connecté à une pluralité de têtes magnétiques 63. Le nombre de têtes 63 dépend notamment de la largeur de la bande magnétique 61 utilisée. Sur une minicasette standard il est possible d'utiliser, par exemple, 2, 4 ou 8 têtes 63. Les têtes magnétiques 63 sont susceptibles d'être appliquées par une bande magnétique 61 se déroulant par exemple entre deux bobines 62. Dans une variante de réalisation le dispositif selon la présente invention comporte une régie 60 connectée entre les sources de signal 8 et le dispositif de traitement 9. Cette régie permet d'effectuer des modifications du signal avant son enregistrement. Lors de l'enregistrement d'un signal le dispositif de traitement effectue une modulation de phase d'au moins deux têtes de lecture 63. Ainsi, le signal est enregistré sur une pluralité de pistes magnétiques en modulation de phase. A la lecture, le dispositif de traitement 9 reconstitue le ou les signaux 500 susceptibles d'être exploités. L'exploitation peut par exemple être une amplification suivie d'une audition par l'intermédiaire d'un haut parleur (non représenté sur la figure 23).

Sur la figure 24, on peut voir le principe du lissage effectué par le dispositif 93 du dispositif de traitement 9. Sur la figure 24, on a utilisé la même référence, 114, pour désigner des intervalles ou périodes de temps ainsi que pour désigner des instants délimitant ces intervalles de temps.

Pour simplifier la figure l'exemple illustré sur la figure 24 est une modulation de phase (et non une modulation amplitude-phase). Il est bien entendu que ce principe s'applique aussi à la modulation amplitude-phase.

Le lissage du signal permet de réduire la bande passante des émetteurs et l'autodistorsion du signal en transmissions numériques.

En transmission numérique en modulation de phase la valeur numérique à transmettre est fonction de la phase du signal à l'intérieur d'une période 114. Ainsi au point 114 le signal présente un saut de phase 112. La présence de ce saut de phase risque de perturber le bon fonctionnement du dispositif, notamment par autodistortion au cas où la bande passante du canal serait suffisante. Ainsi, avantageusement le dispositif de traitement 9 de la figure 6 comporte un dispositif de lissage remplaçant le saut de phase 112 par une transition de phase 113. Le lissage est obtenu, par exemple, par interpolation entre les valeurs au niveau des points 114. Il est bien entendu que la phase étant modifiée autour des points 114. Ainsi il est important de ne point effectuer de mesure de phase à ces instants là. Dans le cas où la mesure de phase sera effectuée par l'intermédiaire d'un filtre adapté effectuant l'intégration du signal durant la période 114 il sera nécessaire de modifier le temps d'intégration du filtre de façon à n'intégrer que la partie de la période 114 durant laquelle la phase transmise est juste.

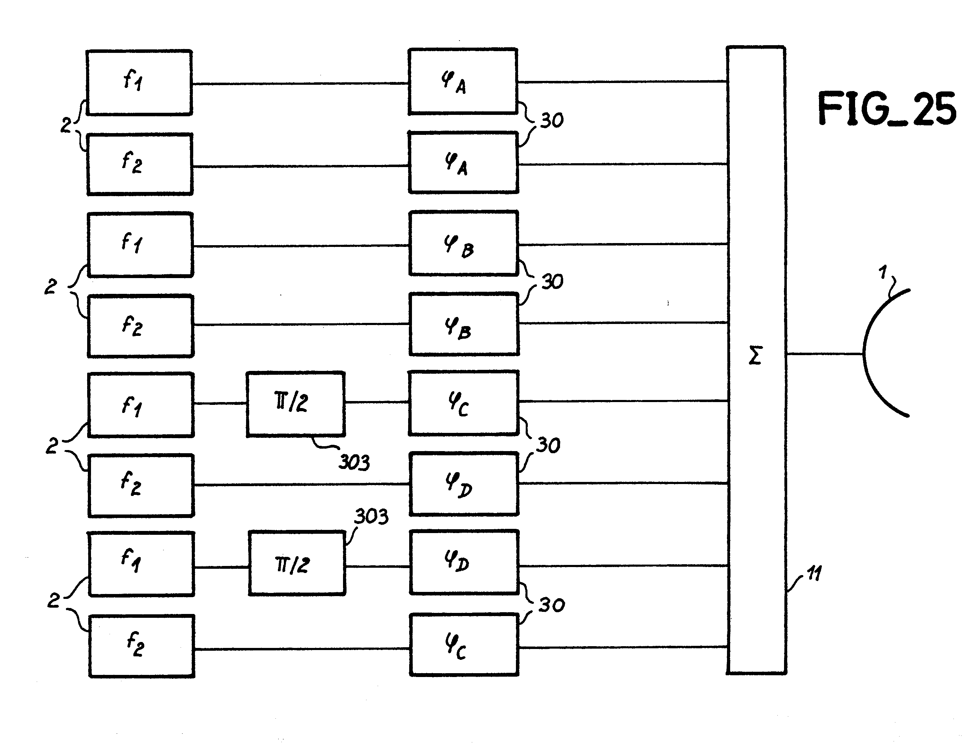

Sur la figure 25, on peut voir une variante de réalisation du dispositif selon l'invention permettant d'augmenter le débit d'informations transmises. Le dispositif de la figure 25 comporte des émetteurs 2 susceptibles de générer une pluralité de fréquences. Les émetteurs 2 sont reliés, soit directement soit à travers une ligne à retard 303 à une pluralité de modulateurs de phase 30. Les modulateurs de phase 30 sont reliés à un dispositif de sommation 11. Le dispositif de sommation 11 est relié à une antenne d'émission 1.

L'exemple illustré comporte quatre émetteurs 2 susceptibles de générer une première fréquence $f_1$ et quatre émetteurs 2 susceptibles de générer une seconde fréquence $f_2$. Le dispositif comporte quatre paires de modulateurs de phase modulant selon quatre lois de phases référencées $\varphi_A$, $\varphi_B$, $\varphi_C$ et $\varphi_D$.

Un émetteur 2 de fréquence $f_1$ est relié à un modulateur $\varphi_A$.
Un émetteur 2 de fréquence $f_1$ est relié à un modulateur $\varphi_B$.
Un émetteur 2 de fréquence $f_2$ est relié à un modulateur $\varphi_A$.
Un émetteur 2 de fréquence $f_2$ est relié à un modulateur $\varphi_B$.
Un émetteur 2 de fréquence $f_2$ est relié à un modulateur $\varphi_C$.
Un émetteur 2 de fréquence $f_2$ est relié à un modulateur $\varphi_D$.

Un émetteur 2 de fréquence $f_1$ est relié à travers une ligne à retard 303, induisant un retard de phase de $\pi/2$ à un modulateur $\varphi_C$.

Un émetteur 2 de fréquence $f_1$ est relié à travers une ligne à retard 303, induisant un retard de phase de $\pi/2$ à un modulateur $\varphi_D$.

L'utilisation des lignes à retard 303 permet d'intercaler un second signal dans les intervalles de temps correspondant à des passages par 0 d'un premier signal. Ainsi il est possible de réaliser un multiplexage temporel de deux signaux. On utilise la propriété des battements entre fréquences proches consistant en le fait que les passages par 0 du signal sont très stables.

Pour obtenir une bonne précision il est impératif, dans cette variante de réalisation, d'effectuer à la réception un échantillonnage bien synchronisé avec le signal transmis.

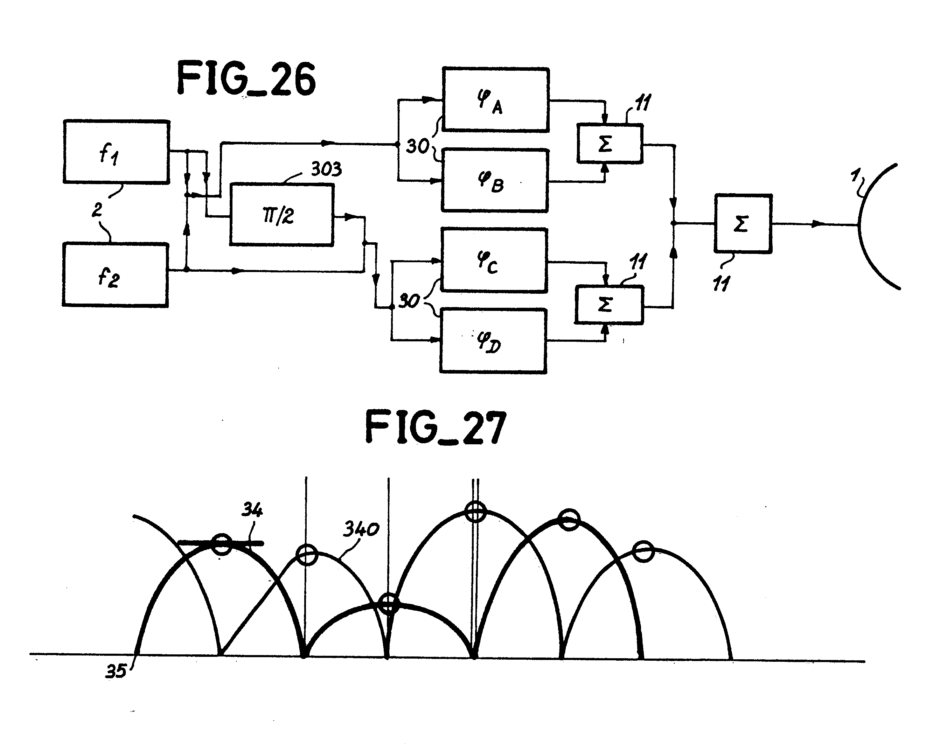

Sur la figure 26, on peut voir une variante de réalisation en hyperfréquence du dispositif de la figure 25.

Le dispositif de la figure 26 comporte un premier émetteur 2 susceptible de générer un signal à une fréquence $f_1$ et un second émetteur 2 susceptible de générer un signal à une seconde fréquence $f_2$.

Les signaux générés par les deux émetteurs 2 sont sonnés et injectés dans deux modulateurs de phase 30 susceptibles de moduler selon une première loi de phase $\varphi_A$ et une seconde loi de phase $\varphi_B$. Les sorties des modulateurs 30 sont reliées à un dispositif de sommation 11.

D'autre part, le signal généré par l'émetteur 2 de fréquence $f_1$ retardé de $\pi/2$ par une ligne à retard 303 est sonné avec le signal généré par l'émetteur 2 de fréquence $f_2$. Ce signal est injecté dans deux modulateurs de phase 30 susceptibles de moduler selon une troisième loi de phase $\varphi_C$ et une quatrième $\varphi_D$. Les sorties des modulateurs 30 sont reliées à un dispositif de sommation 11.

Les sorties des dispositifs de sommation 11 sont reliées aux entrées d'un dispositif de sommation 11. La sortie de ce dernier dispositif de sommation 11 est connectée à une antenne d'émission 1.

Sur la figure 27, est illustré le principe de fonctionnement, à la réception (à près détection) des dispositifs des figures 25 ou 26.

Sur la figure 27 on peut voir deux courbes 34 et 340 correspondant à deux signaux indépendants transmis avec un déphasage de $\pi/2$.

Le signal 340 passe par 0 aux instants 350 régulièrement répartis dans le temps. A ces instants le signal 34 passe par un maximum.

De même, le signal 34 passe par 0 aux instants 35 régulièrement répartis dans le temps.

A ces instants le signal 340 passe par un maximum.

Dans la variante de réalisation du dispositif selon l'invention illustrée sur les figures 25 et 26 on effectue, à la réception, la mesure de la valeur de la phase et/ou de l'amplitude aux instants 350, ou dans des petits intervalles de temps 341 autour des instants 350 pour le signal 34 et aux instants 35, ou dans des petits intervalles de temps 342 autour des instants 35 pour le signal 340.

L'invention s'applique à la détection, transmission et au stockage d'information en utilisant la modulation d'amplitude, la modulation de phase ou la modulation d'amplitude-phase. Le dispositif selon la présente invention permet les transmissions analogiques. Toutefois, le dispositif selon la présente invention est particulièrement performant pour les transmissions et les stockages de données numériques.

L'invention permet la mise en oeuvre de tout émetteur de type connu. Toutefois, le dispositif et le procédé selon la présente invention permet de tirer profil de meilleur rendement ainsi que d'une très bonne linéarité de phase des amplificateurs travaillant en régime saturé, c'est-à-dire en classe C.

L'invention s'applique principalement à la transmission des données numériques utilisant des ondes électromagnétiques comme par exemple les faisceaux hertziens, aux émissions de télévision ainsi qu'aux émissions radiophoniques, à la détection par radar ou sonar.

## Revendications

1. Dispositif d'émission d'ondes modulées comportant une pluralité d'émetteurs (2), caractérisé par le fait qu'il comporte un dispositif (9, 42) de traitement d'information susceptible de fournir à chaque émetteur (2), ou dispositif de modulation de phase (31) associé à un émetteur (2), les valeurs de phase nécessaires pour obtenir un signal modulé en amplitude et/ou en phase par recombinaison dans un dispositif de sommation (11) des signaux issus des émetteurs.

2. Dispositif selon la revendication 1, caractérisé par le fait que ledit dispositif est un dispositif d'émission numérique d'ondes électromagnétiques.

3. Dispositif selon la revendication 1 ou 2, caractérisé par le fait que le dispositif de sommation (11) est un arbre de distribution symétrique comportant des charges (55) susceptibles d'absorber les ondes en quadrature de phase avec les ondes devant être émises.

4. Dispositif selon la revendication 1, 2 ou 3, caractérisé par le fait que ledit dispositif est un dispositif d'émission d'ondes modulées par un signal acoustique.

5. Dispositif selon la revendication 1, 2 ou 3, caractérisé par le fait que ledit dispositif est un émetteur de faisceau hertzien de télécommunication.

6. Dispositif selon la revendication 1, 2, ou 3, caractérisé par le fait que ledit dispositif est un émetteur de télévision.

7. Dispositif selon la revendication 1, 2 ou 3, caractérisé par le fait que ledit dispositif est un radar.

8. Dispositif selon l'une quelconque des revendications précédentes, caractérisé par le fait que le dispositif (9) de traitement d'information contient, pour chaque émetteur (2) un dispositif de lissage (93) du signal supprimant les discontinuités du signal dues à la modulation.

9. Dispositif selon l'une quelconque des revendications précédentes, caractérisé par le fait qu'il comporte au moins deux émetteurs (2) susceptibles de générer un signal dont les fréquences porteuses sont différentes.

10. Dispositif selon la revendication 9, caractérisé par le fait que les battements entre les diverses fréquences porteuses comportent au moins l'harmonique d'ordre trois.

11. Procédé de transmission numérique, caractérisé par le fait que ledit procédé est un procédé de transmission en modulation amplitude-phase, caractérisé par le fait qu'il assigne à un couple (14) (amplitude, phase), à une incertitude près (13), une valeur numérique.

12. Procédé selon la revendication 11, caractérisé par le fait que l'incertitude autour du point 14 correspondant à un couple (amplitude, phase) est un disque (13) dont la surface est égale à $2\sigma$, $\sigma$ étant l'écart type des variations de la valeur transmise.

13. Procédé selon la revendication 11 ou 12, caractérisé par le fait que les couples (amplitude, phase) sont régulièrement répartis sur des cercles concentriques (15, 16, 17, 18).

14. Procédé selon la revendication 13, caractérisé par le fait que les couples (14) (amplitude, phase) sont décalés sur des cercles successifs de la moitié de la distance angulaire entre deux couples (14) successifs.

15. Procédé selon la revendication 11, caractérisé par le fait que les couples (13) (amplitude, phase) sont répartis sur une spirale logarithmique.

16. Dispositif d'enregistrement magnétique d'information comportant une pluralité de têtes magnétiques (63), caractérisé par le fait qu'il comporte un dispositif (9) de traitement d'information susceptible de fournir à chaque tête magnétique (63) les valeurs de phase à enregistrer, qui recombinées à la lecture, reconstitueront le signal enregistré.

17. Dispositif d'enregistrement magnétique selon la revendication 16, caractérisé par le fait que ledit dispositif d'enregistrement est un dispositif d'enregistrement numérique.

18. Dispositif selon la revendication 16 ou 17, caractérisé par le fait que ledit dispositif est un magnétophone.

19. Dispositif selon la revendication 16 ou 17, caractérisé par le fait que ledit dispositif est un magnétoscope.

20. Dispositif selon la revendication 17, caractérisé par le fait que ledit dispositif est un dispositif de stockage de données alphanumériques pour ordinateurs.

0273827

FIG_1

EMETTEUR

EMETTEUR

E

FIG_2

0273827

FIG_3

FIG_4

FIG_5

# FIG_6

SURECHANTILLONAGE  LISSAGE  NUMERIQUE

TRANSCODAGE

91  92  93  94

02738827

0273827

FIG_7

FIG_8

FIG_9

0273827

0273827

# FIG_10

FIG_11

0273827

# FIG_12

# FIG_13

0273827

# FIG_14

# FIG_15

# FIG_16

0273827

FIG_17

52

51

FIG_19

54

FIG_18

FIG_20

# FIG_21

# FIG_22

FIG_23

MISE EN FORME

EMETTEUR

EMETTEUR

Σ

O.L.

# FIG_24

FIG_25

0273827

FIG_26

FIG_27